# EUROPÄISCHE PATENTSCHRIFT

(11) **EP 0 767 807 B1**
(45) Veröffentlichungstag und Bekanntmachung des Hinweises auf die Patenterteilung: **11.03.1998**
(21) Anmeldenummer: 95924254.6
(22) Anmeldetag: 16.06.1995
(51) Int. Cl.: C08G 73/06, C08G 69/10, C08G 73/10

(54) **VERFAHREN ZUR HERSTELLUNG VON POLYASPARAGINSÄURE UND/ODER POLYASPARAGINSÄUREIMIDEN**
PROCESS FOR PRODUCING POLYASPARTIC ACID AND/OR POLYASPARTIC ACID IMIDES
PROCEDE DE PREPARATION D'ACIDE POLYASPARTIQUE ET/OU D'IMIDES D'ACIDE POLYASPARTIQUE

(30) Priorität: 29.06.1994 DE 4427233
(43) Veröffentlichungstag der Anmeldung: 16.04.1997
(73) Patentinhaber: BASF AKTIENGESELLSCHAFT, 67056 Ludwigshafen (DE)
(72) Erfinder: KRONER, Matthias, D-67304 Eisenberg (DE); SCHORNICK, Gunnar, D-67271 Neuleiningen (DE); FEINDT, Hans-Jacob, D-67069 Ludwigshafen (DE); SCHWEINZER, Jürgen, D-67227 Frankenthal (DE)
(86) Internationale Anmeldenummer: EP9502336
(87) Internationale Veröffentlichungsnummer: WO9600743

(56) Entgegenhaltungen:
- EP-A- 0 256 366
- EP-A- 0 613 920
- WO-A-93/23452
- US-A- 5 219 952

## Beschreibung

Die Erfindung betrifft ein Verfahren zur Herstellung von Polyasparaginsäure und/oder Polyasparaginsäureimiden aus
(a) Maleinsäureanhydrid, Maleinsäure, Fumarsäure und/oder Äpfelsäure und
(b) Ammoniak und/oder primären oder sekundären Aminen
durch thermische Kondensation und gegebenenfalls anschließende Hydrolyse der Polyasparaginsäureimide.

Aus der EP-B-0 256 366 ist ein Verfahren zur Herstellung von Polyasparaginamidsäure und ihren Salzen bekannt, bei dem man Salze aus Maleinsäure und Ammoniak im Molverhältnis 1:1 bis 1,5 bei Temperaturen von 125 bis 140°C umsetzt und die entstehenden Polyasparaginsäuren gegebenenfalls in ihre Salze überführt. Bei der Umsetzung kann man auch Maleinsäureanhydrid einsetzen, aus dem jedoch zunächst durch Zugabe von Wasser Maleinsäure hergestellt wird.

Aus der US-A 5 219 952 ist ein Verfahren zur Herstellung von hochmolekularen Polysuccinimiden und hochmolekularer Polyasparaginsäure bekannt. Bei diesem Verfahren suspendiert man zunächst Maleinsäureanhydrid in Wasser und erhitzt die Mischung, um Maleinsäureanhydrid zu schmelzen. Dabei entsteht jedoch Maleinsäure, die abgekühlt und mit einer wäßrigen Lösung von Ammoniumhydroxid versetzt wird. Die Mischung wird anschließend durch Erhitzen auf höhere Temperaturen zu Polysuccinimid kondensiert.

Aus der WO-A-93/23452 ist ein Verfahren zur Herstellung von Salzen der Polyasparaginsäure bekannt, wobei man Maleinsäure oder Fumarsäure mit Ammoniak in Gegenwart von Wasser umsetzt, die Lösung trocknet und den zurückbleibenden weißen kristallinen Feststoff bei Temperaturen von 200 bis 300°C kondensiert. Durch Zugabe von Alkalimetallhydroxiden entstehen aus den Polykondensaten Salze der Polyasparaginsäure.

Die beiden zuletzt genannten Verfahren laufen zweistufig ab, wobei man in der ersten Verfahrensstufe aus Maleinsäureanhydrid Maleinsäure herstellt und eine Neutralisation vornimmt und in der zweiten Verfahrensstufe die in der ersten Stufe erhaltenen Produkte einer Polykondensation unterwirft. Der Einsatz von Wasser als Lösemittel ist hierbei notwendig. Das Wasser muß jedoch in beiden Fällen aus dem Reaktionsgemisch entfernt werden.

Aus der nicht vorveröffentlichten DE-Anmeldung P 43 00 020.7 ist ein Verfahren zur Herstellung von Polymerisaten der Polyasparaginsäure durch thermische Kondensation von Halbamiden der Maleinsäure, Fumarsäure oder der Ammoniumsalze der Halbamide dieser Säuren gegebenenfalls in Gegenwart von cokondensierbaren Verbindungen bekannt. Bei diesem Verfahren wird (a) Maleinsäureanhydrid mit (b) Ammoniak und/oder primären oder sekundären Aminen in Substanz im Molverhältnis (a):(b) von 1:0,1 bis 1:3 zunächst zu Halbamiden von Maleinsäure, Fumarsäure oder deren Ammoniumsalzen bei Temperaturen bis zu 100°C umgesetzt. Die Umsetzungsprodukte werden anschließend, gegebenenfalls mit cokondensierbaren Verbindungen, bei Temperaturen oberhalb von 100°C thermisch kondensiert und die Kondensate gegebenenfalls hydrolysiert. Die dabei erhältlichen Polykondensate oder ihre Hydrolyseprodukte werden beispielsweise als Additiv für Wasch- und Reinigungsmittel verwendet.

Der vorliegenden Erfindung liegt die Aufgabe zugrunde, ein technisch einfacheres Verfahren zur Herstellung von Polykondensaten der Asparaginsäure zur Verfügung zu stellen.

Die Aufgabe wird erfindungsgemäß gelöst mit einem Verfahren zur Herstellung von Polyasparaginsäure und/oder Polyasparaginsäureimiden, wenn man
(a) Maleinsäureanhydrid, Maleinsäure, Fumarsäure und/oder Äpfelsäure mit
(b) Ammoniak und/oder primären oder sekundären Aminen
in Substanz im Molverhältnis (a):(b) von 1:0,1 bis 1:3 gegebenenfalls in Gegenwart von cokondensierbaren Verbindungen bei Temperaturen oberhalb von 100°C miteinander in Kontakt bringt, thermisch kondensiert und die Polykondensate gegebenenfalls anschließend hydrolysiert.

Als Ausgangsmaterial zur Herstellung der Polymeren kommen als Komponente (a) Maleinsäureanhydrid, Maleinsäure, Fumarsäure, Äpfelsäure oder Mischungen der genannten Carbonsäuren in Betracht. Vorzugsweise verwendet man aus dieser Gruppe Maleinsäureanhydrid.

Als Komponente (b) setzt man Ammoniak und/oder primäre oder sekundäre Amine ein. Beispiele für Amine sind Mono- oder Dialkylamine mit 1 bis 30 C-Atomen. Einzelne Verbindungen dieser Art sind Methylamin, Ethylamin, n-Propylamin, iso-Propylamin, n-Butylamin, iso-Butylamin, Pentylamin, Hexylamin, Octylamin, Decylamin, Dodecylamin, Palmitylamin, Stearylamin, Oleylamin, Dimethylamin, Diethylamin, Di-n-propylamin, Di-iso-propylamin, Di-n-butylamin, Dihexylamin und Dioctylamin. Außer Ammoniak und den Aminen kann man auch noch Hydroxylamin und Hydrazin einsetzen, sowie Ethanolamin, Propanolamin, Butanolamin, Diethanolamin oder Dipropanolamin.

Die Umsetzung der Verbindungen der Komponente (a) mit den Verbindungen der Komponente (b) verläuft stark exotherm. Diese Umsetzung wird in Substanz durchgeführt, d.h. in Abwesenheit von Verdünnungsmitteln. Das Molverhältnis von (a):(b) beträgt 1:0,1 bis 1:3, vorzugsweise 1:1 bis 1:2. Als Komponente (b) können auch Mischungen verwendet werden, z.B. Mischungen aus Ammoniak und Aminen. Solche Mischungen können beispielsweise 10 bis 90, vorzugsweise 70 bis 80 mol-% Ammoniak enthalten. Als Amine, die in Mischung mit Ammoniak eingesetzt werden können, verwendet man beispielsweise Ethylendiamin, Polyethylenimin, Diethylentriamin, Triethylentetramin und/oder mit Aminogruppen endgruppenverschlossene Polyalkylenglykole.

Vorzugsweise verwendet man als Komponente (a) Maleinsäureanhydrid und (b) Ammoniak und führt die Umsetzung und Polykondensation bei Temperaturen von 130 bis 250°C durch. Die Komponenten (a) und (b) werden erfindungsgemäß bei Temperaturen oberhalb von 100°C miteinander in Kontakt gebracht, z.B. bei einer Temperatur von mindestens 105°C und vorzugsweise bei einer Temperatur von mindestens 120°C. Da die Reaktion zwischen den Komponenten (a) und (b) exotherm verläuft, kann die freiwerdende Energie für die Polykondensation der aus den Komponenten (a) und (b) zunächst entstehenden Addukte verwendet werden. Der Vorteil dieses Verfahrens liegt gegenüber den bekannten Verfahren darin, daß man die Addukte nicht isolieren muß und die Reaktion in einer einzigen Stufe durchführen kann. Das erfindungsgemäße Verfahren wird vorzugsweise in dem Temperaturbereich von 130 bis 250°C durchgeführt. Es kann beispielsweise in der Weise durchgeführt werden, daß eine der Komponenten (a) oder (b) in der Reaktionszone vorgelegt und darin auf eine Temperatur von beispielsweise 120 bis 200°C erhitzt wird. Dann fügt man absatzweise oder kontinuierlich die andere Komponente zu und erhitzt das Reaktionsgemisch nach vollständiger Zugabe der 2. Komponente längere Zeit auf eine Temperatur, bei der beispielsweise die Zugabe erfolgte oder - um die Reaktion zu beschleunigen - auf eine höhere Temperatur, z.B. erhitzt man das Reaktionsgemisch auf eine Temperatur in dem Bereich von 205 bis 220°C. Die Amine können gasförmig oder flüssig in die Reaktionszone eingebracht werden. Die Umsetzung kann gegebenenfalls auch unter Druck oder in einem geschlossenen Reaktionsraum unter vermindertem Druck vorgenommen werden. Dies hat den Vorteil, daß die Amine bzw. Ammoniak nicht aus der Reaktionszone entweichen.

Die Umsetzung der Komponenten (a) und (b) bei Temperaturen zwischen mehr als 100, z.B. 105 bis 150°C führt hauptsächlich zur Bildung von Polyasparaginsäuren. Wird die Umsetzung und Polykondensation der Komponenten (a) und (b) bei Temperaturen oberhalb von 170°C durchgeführt, so enthalten die Reaktionsp-rodukte zunehmend Polyasparaginsäureimide. Sobald die Temperaturen bei der Polykondensation auf oberhalb von 200°C erhöht werden, entstehen nur noch Polyasparaginsäureimide.

Die Komponenten (a) und (b) können gegebenenfalls auch in Gegenwart von damit cokondensierbaren Verbindungen in Kontakt gebracht werden. Unter den bei dem erfindungsgemäßen Verfahren vorgesehenen Temperaturen von mehr als 100, vorzugsweise mehr als 120°C erfolgt dann eine Cokondensation. Geeignete cokondensierbare Verbindungen sind beispielsweise Aminosäuren, Carbonsäuren, Anhydride mehrbasischer Carbonsäuren, Alkohole, alkoxylierte Alkohole, alkoxylierte Amine, Aminozucker, Kohlenhydrate, Zuckercarbonsäuren und/oder nichtproteinogene Aminosäuren. Bezogen auf 1 Teil der Umsetzungsprodukte aus den Komponenten (a) und (b) verwendet man die cokondensierbaren Verbindungen in Mengen von 0 bis 30 Gew.-%.

Die Komponenten (a) und (b) können gegebenenfalls auch in Gegenwart von Kondensationsprodukten der Umsetzungsprodukte aus (a) und (b) miteinander in Kontakt gebracht werden. Die Kondensationsprodukte sind in diesem Fall bereits auf eine Temperatur von oberhalb 100°C erhitzt. Außer den Polykondensaten, die bei der Umsetzung von (a) mit (b) erfindungsgemäß entstehen, können bei dem miteinander in Kontakt bringen der Komponenten (a) und (b) andere unter den Polymerisationsbedingungen inerte Pulver anwesend sein. Bei diesen inerten Pulvern handelt es sich vorzugsweise um Materialien, die unter den Temperaturbedingungen, bei denen die Umsetzung erfindungsgemäß durchgeführt wird, nicht schmelzen. Der Anteil an nicht schmelzenden Pulvern im Endprodukt kann beispielsweise 5 bis 99, vorzugsweise 10 bis 90 Gew.-% betragen. Als nicht schmelzende inerte Pulver verwendet man vorzugsweise Asparaginsäureimideinheiten enthaltende Polymerisate. Wenn man das erfindungsgemäße Verfahren kontinuierlich durchführt, kann man die entstehenden pulverförmigen Reaktionsprodukte als inerte unter den Reaktionsbedingungen nicht schmelzende Pulver teilweise in die Reaktionszone zurückführen. Andere geeignete nicht schmelzende Pulver sind beispielsweise Sand, Glaspulver, Keramikpulver, Stahlkugeln, Asparaginsäure, Tonmineralien, Aminosäuren, Schichtsilikate, Zeolith, Aluminiumoxid, amorphe Silikate, Talkum, Siliciumdioxid, Kieselgur, Alumosilikate, Natriumsulfat, Titandioxid, Zement, Gips, Natriumcarbonat, Kaliumcarbonat, Ionenaustauscherharze, Natriumaluminiumsilikate, Natriumphosphate (Pentanatriumtriphosphat), Magnesiumsilikat, Kohlenstoff, Ruß, Aktivkohle, Molekularsiebe, Stärke, Metalloxide, Silikate und Sulfide. Die Teilchengröße der inerten Pulver beträgt beispielsweise 50 µm bis 50 mm, vorzugsweise 100 µm bis 5 mm.

Das erfindungsgemäße Verfahren kann in sämtlichen Apparaturen durchgeführt werden, die üblicherweise auch zur Herstellung von Polyaspartimid geeignet sind, z.B. Wirbelschichtreaktoren, in denen ein feinteiliges Material mit Hilfe eines inerten Gasstroms bewegt wird, sowie Wirbelschichtreaktoren, die zusätzlich noch mit Rührern oder anderen mechanischen Mischorganen ausgestattet sind. Die Umsetzung kann auch in einer zirkulierenden Wirbelschicht sowie in Knetern, Extrudern und Schaufeltrocknern vorgenommen werden. Nach dem erfindungsgemäßen Verfahren erhält man - in Abhängigkeit von der Reaktionstemperatur - Polyasparaginsäure, Polyasparaginsäureimide oder Mischpolymerisate aus Polyasparaginsäure und Polyasparaginsäureimiden. Die Polykondensate haben eine Molmasse M_{w} von 500 bis 10 000, vorzugsweise 800 bis 6 000. Die Reaktionsprodukte können direkt als Zusatz zu Wasch- und Reinigungsmitteln verwendet werden. Vorzugsweise unterwirft man die nach dem erfindungsgemäßen Verfahren erhältlichen Polykondensate einer Neutralisation mit Basen. Dabei entstehen die Salze der Asparaginsäure. Geeignete Basen sind beispielsweise Natronlauge, Kalilauge, Soda, Calciumhydroxid oder Magnesiumoxid. Vorzugsweise verwendet man Natronlauge zur Hydrolyse der Polyasparaginsäureimide und zur Neutralisation der dabei entstehenden Polyasparaginsäuren. Die Alkalisalze der Polyasparaginsäure können außerdem als Scaleinhibitor oder als Dispergiermittel für Pigmente und als Zusatz zu Zementaufschlämmungen verwendet werden.

Die Molekulargewichte wurden mittels Gelpermeationschromatographie (GPC) mit Polyacrylsäure-Natrium-Salz als Eichsubstanzen bestimmt. Die Polyacrylsäuren waren mit Hilfe der Lichtstreuungsmethode geeicht.

### Beispiel 1

In einem 500 ml fassenden und mit einem Gaseinleitungsrohr versehenem Rundkolben werden 100 g Maleinsäureanhydrid vorgelegt. Der Kolben ist über eine Destillationsbrücke mit einem 2. Rundkolben verbunden, der als Reaktor für die Durchführung der Umsetzung dient. Die Destillationsbrücke wird mit einem Heizband umwickelt und auf eine Temperatur von 180°C vorgeheizt. Der Kolben, in dem die Reaktion durchgeführt ist, ist ebenfalls mit einem Gaseinleitungsrohr versehen, durch das gasförmiger Ammoniak bis auf den Boden des Kolbens geleitet werden kann. Der Reaktionskolben wird mit einem Bad beheizt, das eine Temperatur von 175°C hat. Der Druck im Reaktor wird auf 150 mbar erniedrigt und gleichzeitig leitet man 40 1 Stickstoff pro Stunde in den mit Maleinsäureanhydrid beschickten Kolben und gleichzeitig 16 1 Ammoniakgas pro Stunde in den Reaktionskolben. Dann wird der Maleinsäureanhydrid enthaltende Kolben auf eine Temperatur von 160°C erhitzt. Die geschilderten Bedingungen werden 5 Stunden aufrechterhalten. Es ist lediglich darauf zu achten, daß alle Teile der Apparatur so heiß sind, daß sich Maleinsäureanhydrid nicht an kalten Flächen niederschlagen kann. Im Reaktionskolben bildet sich eine braune glasige Masse, die aus Polyaspartimid besteht. Durch Hydrolyse mit Hilfe von Natronlauge erhält man aus dem Reaktionsprodukt eine wäßrige Lösung des Natriumsalzes einer Polyasparaginsäure mit einer Molmasse von 2500.

### Beispiel 2

Beispiel 1 wird mit der Ausnahme wiederholt, daß man 1,6 l Ammoniak pro Stunde in den Reaktionskolben einleitet. Unter diesen Bedingungen entweicht kein Ammoniak aus dem Reaktionskolben. Nach 4-stündiger Reaktionszeit erhält man einen glasig braunen Feststoff, der nach Hydrolyse mit wäßriger Natronlauge in eine wäßrige Natriumpolyaspartatlösung überführt wird. Das Molgewicht der Polyasparaginsäure beträgt 2500.

### Beispiel 3

In einem 2 l fassenden zylindrischen Reaktor, der mit Rührer und Gaseinleitungsrohr ausgestattet ist, werden 1000 g Maleinsäureanhydrid vorgelegt und auf eine Temperatur von 170°C erhitzt. Sobald das Maleinsäureanhydrid geschmolzen ist und eine Temperatur von 170°C erreicht hat, leitet man 18 l pro Stunde gasförmiges Ammoniak in die Schmelze ein. Man leitet solange Ammoniak in die Schmelze ein, bis die Reaktionsmischung eine so hohe Viskosität erreicht hat, daß sie nicht mehr gerührt werden kann. Dies ist nach etwa 3-stündigem Einleiten von Ammoniak der Fall. Der Ammoniakgasstrom wird dann unterbrochen und der Kolbeninhalt abgekühlt. Er erstarrt zu einer festen Reaktionsmasse, die spektroskopisch als Polyasparaginsäureimid identifiziert wird. Das daraus durch Hydrolyse in Wasser und Zugabe von Natronlauge erhältliche Natriumpolyaspartat hat ein Molgewicht von 2 200.

## Patentansprüche

1. Verfahren zur Herstellung von Polyasparaginsäure und/oder Polyasparaginsäureimiden, dadurch gekennzeichnet, daß man
(a) Maleinsäureanhydrid, Maleinsäure, Fumarsäure und/oder Äpfelsäure mit
(b) Ammoniak und/oder primären oder sekundären Aminen
in Substanz im Molverhältnis (a):(b) von 1:0,1 bis 1:3 gegebenenfalls in Gegenwart von cokondensierbaren Verbindungen bei Temperaturen oberhalb von 100°C miteinander in Kontakt bringt, thermisch kondensiert und die Polykondensate gegebenenfalls anschließend hydrolysiert.

2. Verfahren nach Anspruch 1, dadurch gekennzeichnet, daß man als Komponente (a) Maleinsäureanhydrid und als Komponente (b) Ammoniak einsetzt und die Umsetzung und Polykondensation bei 130 bis 250°C durchführt.

3. Verfahren nach Anspruch 1 oder 2, dadurch gekennzeichnet, daß man als cokondensierbare Verbindungen Aminosäuren, Carbonsäuren, Anhydride mehrbasischer Carbonsäuren, Alkohole, Amine, alkoxylierte Alkohole, alkoxylierte Amine, Aminozucker, Kohlenhydrate, Zuckercarbonsäuren und/oder nichtproteinogene Aminocarbonsäuren einsetzt.

4. Verfahren nach Anspruch 1 oder 2, dadurch gekennzeichnet, daß man die Komponenten (a) und (b) in Gegenwart von Kondensationsprodukten der Umsetzungsprodukte aus (a) und (b) miteinander in Kontakt bringt.

5. Verfahren nach Anspruch 3, dadurch gekennzeichnet, daß man die Komponenten (a) und (b) in Gegenwart von anderen, unter den Polymerisationsbedingungen inerten Pulvern miteinander in Kontakt bringt.

6. Verfahren nach Anspruch 4, dadurch gekennzeichnet, daß man als inerte Pulver Asparaginsäureimideinheiten enthaltende Polymerisate einsetzt.

## Claims

1. A process for preparing polyaspartic acid and/or polyaspartimides, which comprises
(a) maleic anhydride, maleic acid, fumaric acid and/or malic acid being brought into contact with
(b) ammonia and/or primary or secondary amines
without diluent in the (a):(b) molar ratio of from 1:0.1 to 1:3 in the presence or absence of cocondensable compounds at temperatures above 100°C and being thermally condensed, and the polycondensates then being hydrolyzed where appropriate.

2. A process as claimed in claim 1, wherein maleic anhydride is employed as component (a) and ammonia is employed as component (b), and the reaction and polycondensation are carried out at from 130 to 250°C.

3. A process as claimed in claim 1 or 2, wherein amino acids, carboxylic acids, anhydrides of polybasic carboxylic acids, alcohols, amines, alkoxylated alcohols, alkoxylated amines, aminosaccharides, carbohydrates, saccharidecarboxylic acids and/or non-proteinogenous amino carboxylic acids are employed as cocondensable compounds.

4. A process as claimed in claim 1 or 2, wherein components (a) and (b) are brought into contact with one another in the presence of condensates of the products of the reaction of products (a) and (b).

5. A process as claimed in claim 3, wherein components (a) and (b) are brought into contact with one another in the presence of other powders which are inert under the polymerization conditions.

6. A process as claimed in claim 4, wherein polymers containing aspartimide units are employed as inert powders.

## Revendications

1. Procédé de préparation d'acide polyaspartique et/ou de polyaspartimides, caractérisé en ce qu'on met en contact
(a) de l'anhydride maléique, de l'acide maléique, de l'acide fumarique et/ou de l'acide malique avec
(b) de l'ammoniac et/ou des amines primaires ou secondaires,
essentiellement en un rapport molaire (a) : (b) de 0,1 à 1 : 3, éventuellement en présence de composés cocondensables à des températures supérieures à 100°C, on les condense par voie thermique et on hydrolyse ensuite éventuellement les polycondensats.

2. Procédé selon la revendication 1, caractérisé en ce qu'on utilise comme composant (a) de l'anhydride maléique et comme composant (b) de l'ammoniac et l'on effectue la réaction et la polycondensation à 130-250°C.

3. Procédé selon l'une ou l'autre des revendications 1 et 2, caractérisé en ce qu'on utilise comme composés cocondensables des amino-acides, des acides carboxyliques, des anhydrides d'acides polycarboxyliques, des alcools, des amines, des alcools alcoxylés, des amines alcoxylées, des amino-sucres, des glucides, des sucres-acides carboxyliques et/ou des amino-acides carboxyliques non protéinogènes.

4. Procédé selon l'une ou l'autre des revendications 1 et 2, caractérisé en ce qu'on met en contact l'un avec l'autre les composants (a) et (b) en présence de produits de condensation des produits de réaction de (a) et (b).

5. Procédé selon la revendication 3, caractérisé en ce qu'on met les composants (a) et (b) en contact en présence d'autres poudres inertes dans les conditions de la polymérisation.

6. Procédé selon la revendication 4, caractérisé en ce qu'on utilise comme poudres inertes des polymères contenant des motifs aspartimides.
